# EUROPÄISCHE PATENTSCHRIFT

(11) **EP 1 058 983 B1**
(45) Veröffentlichungstag und Bekanntmachung des Hinweises auf die Patenterteilung: **23.03.2005**
(21) Anmeldenummer: 99928872.3
(22) Anmeldetag: 14.01.1999
(51) Int. Cl.: H04L 12/24

(54) **VERFAHREN UND KOMMUNIKATIONSSYSTEM ZUR BEHANDLUNG VON ALARMEN DURCH EIN MEHRERE MANAGEMENTEBENEN AUFWEISENDES MANAGEMENTNETZ**
METHOD AND COMMUNICATION SYSTEM FOR PROCESSING ALARMS USING A MANAGEMENT NETWORK INVOLVING SEVERAL LAYERS OF MANAGEMENT
PROCEDE ET SYSTEME DE COMMUNICATION POUR LE TRAITEMENT D'ALARMES PAR UN RESEAU DE GESTION PRESENTANT PLUSIEURS NIVEAUX DE GESTION

(30) Priorität: 19.01.1998 DE 19801785
(43) Veröffentlichungstag der Anmeldung: 13.12.2000
(73) Patentinhaber: SIEMENS AKTIENGESELLSCHAFT, 80333 München (DE)
(72) Erfinder: Hirsch, Lucian, 81373 München (DE); Schmidbauer, Alfred, 81671 München (DE)
(86) Internationale Anmeldenummer: PCT/DE1999/000072
(87) Internationale Veröffentlichungsnummer: WO 1999/037102

(56) Entgegenhaltungen:
- EP-A- 0 810 756
- WO-A-96/20547
- WO-A-96/24899
- US-A- 5 204 955

## Beschreibung

Die Erfindung betrifft ein Verfahren sowie ein entsprechendes Kommunikationssystem zur Behandlung von Alarmen durch ein mehrere Managementebenen aufweisendes Managementnetz, wobei für einen Alarmdatenabgleich zwischen einem Agent einer Managementebene und zumindest einem Manager einer nächsthöheren Managementebene die Alarmdaten aktiver Alarme übertragen werden.

Die Prinzipien eines Managementnetzes, die auch als TMN-Prinzipien (Telecommunications Management Network) bezeichnet werden, definieren mehrere Managementebenen für das Management eines Kommunikationssystems - beispielsweise eines Mobil-Kommunikationssystems - , wobei jede Ebene eine doppelte Funktion hat. Im managenden System hat jede Ebene außer der untersten eine Manager-Funktion für die darunterliegende Ebene. Im gemanagten System hat jede Ebene außer der obersten eine Agenten-Funktion für die nächsthöhere Ebene.

Das Fehlermanagement ("Fault Management") ist ein wichtiger Teil des TMN-Managements. Grundsätzlich spielt hier der Agent die aktive Rolle, indem er Fehler der eigenen Managementebene rechtzeitig und genau erkennt und an den Manager der nächsthöheren Ebene als Alarme überträgt. Die Übertragung von Alarmdaten vom Agent zum Manager ist unkritisch, solange der Kommunikationsmechanismus zwischen diesen Systemen nicht gestört ist. Wenn die Verbindung zwischen den beiden Managementebenen, also zwischen Agent und Manager, für eine bestimmte Zeit nicht mehr gewährleistet ist, muß der Agent die während dieses Intervalls aufgetretenen Alarme zwischenspeichern, um sicherzustellen, daß nach dem Wiederherstellen der Kommunikationsmöglichkeit dem Manager zum einen möglichst schnell eine Übersicht der z.Zt. aktiven Alarme - z.B. in Form einer Liste - zur Verfügung gestellt wird, und der Manager zum anderen eine möglichst lückenlose Alarmgeschichte ("alarm history") sowohl der aktiven als auch der beendeten Alarme ("cleared alarms") aufbauen kann.

Zu diesem Zweck wird ein Alarmdatenabgleich (alarm realignment) zwischen Agent und Manager bei jedem neuen Verbindungsaufbau nach einem Verbindungsabbruch oder nach einer Initialisierung des Agenten oder des Managers ausgeführt. Alle Alarmdaten aktiver Alarme, zu denen Fehler im Agent noch nicht behoben sind - erkennbar daran, daß sie nicht als "cleared alarms" gekennzeichnet sind - , sind daher schnellstmöglich und vollständig der nächsthöheren Managementebene zur Verfügung zu stellen.

In der nicht vorveröffentlichten Patentanmeldung WO 99/29068 sind ein derartiges Verfahren und Kommunikationssystem zur Behandlung von Alarmen angegeben, die eine Basisfunktionalität für den Manager zur Anforderung aller Alarme vom Agent beschrieben. Dabei sendet der Agent die aktiven Alarme als Sequenz standardisierter M-EVENT-REPORTS, die in eine vom Manager zu Anfang initiierte M-ACTION-Request Anforderung und in eine vom Agent zum Ende initiierte M-ACTION-Response Antwort eingebettet ist. Dieses sind generische CMISE-standardisierte (Common Management Information Service Element) Prozeduren, die gemäß ITU-T X.710 definiert sind. Die ITU-T X. 733 definiert den Inhalt einer standardisierten Alarmübertragung (alarm report), die gemäß den M-EVENT-REPORT Services durchgeführt wird. Alle in Rahmen dieser M-ACTION definierten M-EVENT-REPORTS sind zu der jeweiligen Anforderung durch Verwendung von Korrelationsinformationen eindeutig korreliert. Dies erlaubt dem Manager, diese M-EVENT-REPORTS einer bestimmten Anforderung zuzuordnen und darüber hinaus von anderen, "regulären" M-EVENT-REPORTS zu unterscheiden.

Aus der internationalen Patentanmeldung WO 96/24899 ist ein Verfahren mit einem oder mehreren Managern sowie einem Agent bekannt, bei dem die Anzahl der Nachrichten im Agent reduziert werden soll. Zur Reduzierung der Verarbeitungslast im Agent sieht das Verfahren vor, bereits die Erzeugung der Nachrichten im "managed system" vom Operator am "managing system" kontrollieren zu lassen, d.h. der Agent soll wirklich nur solche Nachrichten generieren, die für den Manager relevant und daher anschließend als "Event reports" über die Manager-Agent-Schnittstelle zu übertragen sind. Das Erzeugen der Nachrichten im Agent erfolgt abhängig von einem "notification stop"- Attribut bei der Definition der einzelnen Objektinstanz, sodass das Aussenden der Nachrichten lastabhängig erlaubt oder verhindert wird.

Aus der internationalen Patentanmeldung WO 96/20547 ist ein Verfahren zur Behandlung von Alarmen in einem Kommunikationssystem bekannt, bei dem zwei Ringpuffer von entkoppelten Agent-Prozessoren verwendet werden, mit denen eine "snapshot"-Kopie des Systemzustands im Agent zu einem Zeitpunkt, wenn die Kommunikation zwischen Manager und Agent nicht mehr läuft, erzeugt wird.

Aus der Europäischen Patentanmeldung EP 0 810 756 A2 ist ein Verfahren bekannt, bei dem zum Managen eines Netzes ein Netzmanager vordefinierte Anforderungsnachrichten an Geräte sendet, die darauf antworten, wenn bestimmte Ereignisse auftreten. In der Antwort ist eine herstellerspezifische Information über den Gerätezustand enthalten.

Aus der US-Patentschrift 5,204,955 ist ein Netzmanagement-System bekannt, bei dem mehrere Zeitgeber (timers) im Manager und im Agent definiert werden. Mit Hilfe dieser Zeitgeber kann eine sichere Kontrolle verschiedener Tests, getriggert entweder durch eine Manager-Anforderung oder selbsttätig durch den Agent, gewährleistet werden.

Aufgabe der Erfindung ist es, ein Verfahren und "Kommunikationssystem zur Behandlung von Alarmen durch ein mehrere Managementebenen aufweisendes Managementnetz anzugeben, durch das ein Alarmdatenabgleich zwischen einem Agent und zumindest einem Manager weiter verbessert wird.

Diese Aufgabe wird gemäß der Erfindung hinsichtlich des Verfahrens durch die Merkmale des Patentanspruchs 1 und hinsichtlich des Kommunikationssystems durch die Merkmale des Patentanspruchs 15 gelöst. Weiterbildungen der Erfindung sind den Unteransprüchen zu entnehmen.

Die Erfindung geht davon aus, daß für einen Alarmdatenabgleich zwischen einem Agent einer Managementebene und zumindest einem Manager einer nächsthöheren Managementebene die Alarmdaten aktiver Alarme übertragen werden. Erfindungsgemäß wird von dem Manager eine Nachricht zu dem Agent gesendet, durch die ein automatischer, von dem Agent wiederholt initiierter Alarmdatenabgleich angefordert wird. Eine Korrelationsinformation für eine Zuordnung der jeweiligen Anforderung zu den vom Agent nachfolgend gesendeten Nachrichten mit den Alarmdaten wird vom Manager empfangen. Den Alarmdatenabgleich steuert der Manager abhängig von zumindest einem zum Agent gesendeten Parameter.

Durch den Erfindungsgegenstand kann der Alarmdatenabgleich vom Agent wiederkehrend automatisch gestartet werden, wobei er für den Manager gegenüber der Basisfunktionalität parametrisierbar ist, d.h. nicht mehr alle aktiven Alarme müssen zwangsläufig vom Agent gesendet werden, sondern nur die durch den übermittelten Parameter näher definierten. Durch die Parameter ergibt sich für den Manager eine Auswahlfunktion für eine Teilmenge aus allen Alarmen, die vom Agent in periodischen Zeitabständen von allein geliefert werden, ohne daß es dafür eines Anstosses durch den Manager bedarf. Der Manager wird einerseits in der Steuerung der Anforderungen entlastet, andererseits besitzt er die Möglichkeit der steuernden Beeinflussung des Abgleichs durch vergabe der Parameter und unter Anwendung standardisierter Nachrichten zur Erhöhung der Flexibilität des Managers und Reduzierung des Nachrichten- und Informationsflusses in erheblichem Maße. Erst durch die parametrisierbare Alignment-Funktionalität gemäß der Erfindung können beispielsweise eine Priorisierung der Alarme und/oder eine aktive Steuerung der Reihenfolge der automatisch vom Agent bereitgestellten Alarme erzielt werden. Besonders die Kombination der Basisfunktionalität - Verwendung einer Korrelationsinformation - mit der parametrisierbaren automatischen Alignment-Funktionalität führt zu einem besonders effektiven Verfahren und Kommunikationssystem, das eine optimale Nutzung der Übertragungsressourcen auf der Schnittstelle der Agent-Manager-Beziehung sowie ein schnellstmögliches periodisches Bereitstellen nur der vom Manager gewünschten Alarmdaten aktiver Alarme für die nächsthöhere Managementebene durch den Agent bewirkt.

Gemäß einer Weiterbildung der Erfindung werden von dem Manager der oder die Parameter in der Nachricht zum Alarmdatenabgleich zu dem Agent gesendet.

Gemäß einer anderen Weiterbildung der Erfindung wird die Nachricht zum automatischen Alarmdatenabgleich von dem Manager einzeln für jede Anforderung zu dem Agent gesendet. Auf diese Weise generiert der Manager jedes Mal, wenn er ein automatisches Liefern der Alarme in wiederkehrenden Zeitabständen durch den Agent wünscht, individuell die Anforderung

Gemäß einer alternativen Weiterbildung der Erfindung wird die Nachricht zum automatischen Alarmdatenabgleich von dem Manager für mehrere Anforderungen gemeinsam zu dem Agent gesendet. Dadurch erfolgt die vom Manager gewünschte Parametrisierung des automatischen Alarmdatenabgleichs einmalig für einen längeren Zeitraum und die darin enthaltene Einstellung des Managers hat Gültigkeit für den Agent.

Dabei wird vorzugsweise von dem Agent nach jedem durchgeführten Alarmdatenabgleich - in einem gesamten automatischen Alarmdatenabgleich mit mehreren Wiederholungen - eine Nachricht zum Manager gesendet, mit der dem Manager das Ende des einzelnen Alarmdatenabgleichs mitgeteilt wird.

Das periodische automatische Bereitstellen und Senden der Alarme durch den Agent erfolgt anhand eines Startzeitpunkts und eines Endezeitpunkt für den gesamten Alarmdatenabgleich sowie eines zeitintervalls zur Wiederholung des jeweiligen Alarmdatenabgleichs, die alle von dem Manager in der Nachricht zum Alarmdatenabgleich gesendet werden.

Um die Flexibilität des Managers zu erhöhen, wird vorzugsweise von dem Manager zusätzlich eine Zustandsinformation zum Agent gesendet, die zum Unterbrechen gesetzt und zum Fortsetzen des automatischen Alarmdatenabgleichs rückgesetzt wird.

Gemäß weiterer vorteilhafter Weiterbildungen der Erfindung kann die Parametrisierung mit einem oder mehreren der folgenden, von dem Manager jeweils eingestellten Parameterwerten erfolgen. Durch den Parameterwert werden vom Agent Alarme angefordert,
- die von ausgewählten Agenteinheiten stammen,
- für die eine Dringlichkeit angenommen wird,
- anhand dessen der Agent eine Priorisierung beim Senden der angeforderten Alarme nach deren Dringlichkeit, vorzugsweise anhand unterschiedlicher Dringlichkeitswerte, vornimmt,
- die innerhalb eines durch einen Anfangszeitpunkt und einen Endzeitpunkt definierten Zeitraum entstehen,
- anhand dessen der Agent eine Priorisierung beim Senden der Alarme nach dem Entstehungszeitpunkt der Alarme vornimmt.

So sieht eine besonders günstige Ausgestaltung des Erfinungsgegenstandes vor, daß von dem Agent die Alarmdaten der Alarm mit kritischer Dringlichkeit, bei der die Funktionalität als nicht mehr gegeben angenommen wird, zuerst und die Alarmdaten der Alarme mit unkritischer Dringlichkeit, bei der die Funktionalität als nicht mehr gegeben angenommen wird, zuletzt automatisch bereitgestellt und gesendet werden.

Mit der obigen Vorgehensweise kann der Manager die im Hinblick auf die Funktionalität besonders kritischen und damit für ihn wichtigen Alarme automatisch, periodisch vom Agent gezielt abrufen lassen, und dabei die Schnittstelle zum Agent durch den nur auf bestimmte Alarme eingeschränkten Informationsfluß gegenüber dem herkömmlichen Verfahren der Meldung aller Alarme wesentlich entlasten.

Nachstehend wird die Erfindung anhand von Ausführungsbeispielen unter Bezugnahme auf die Figuren näher erläutert. Es zeigen
- FIG 1: das Blockschaltbild eines Managementnetzes für ein Mobil-Kommunikationssystem mit Agent-Manager-Beziehung zwischen einem Betriebs- und Wartungszentrum und einem oder mehreren Netzmanagementzentren,
- FIG 2: das Blockschaltbild des Managementnetzes gemäß Figur 1 mit Agent-Manager-Beziehung zwischen einem Basisstationssystem und einem Betriebs- und Wartungszentrum zur Durchführung von zumindest zwei Anwendungen für das Basisstationssystem,
- FIG 3: das Blockschaltbild von Agent und Manager zur Behandlung der Alarme für parallel oder seriell ablaufende Alarmdatenabgleiche,
- FIG 4: den Nachrichtenfluß zwischen dem Manager und dem Agent zur parameterabhängigen Steuerung eines automatischen Alarmdatenabgleichs individuell für jede Anforderung,
- FIG 5: den Nachrichtenfluß nach FIG 4 für einen periodisch wiederkehrenden, automatischen Alarmdatenabgleich bei Verwendung eines die Dringlichkeit betreffenden Parameterwertes,
- FIG 6: den Nachrichtenfluß zwischen dem Manager und dem Agent zur parameterabhängigen Steuerung des automatischen Alarmdatenabgleichs gemeinsam für mehrere Anforderungen, und
- FIG 7: den Nachrichtenfluß nach FIG 6 für den periodisch wiederkehrenden, automatischen Alarmdatenabgleich bei verwendung des die Dringlichkeit betreffenden Parameterwertes.

Das Ausführungsbeispiel beschreibt die Erfindung anhand eines TMN-Konzepts für das Management eines Mobil-Kommunikationssystems, das beispielsweise Netzeinrichtungen eines Mobilfunknetzes nach dem GSM-Standard aufweist. Die Erfindung ist aber nicht auf Mobilfunknetze beschränkt, sondern läßt sich auf Telekommunikationsnetze jeder Art, die ein TMN-Managementnetz nutzen, anwenden.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit die nächste Hierarchieebene bildenden Funkstationen, die als Basisstationen bezeichnet werden. Die beispielsweise Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dient. Überwachungsmaßnahmen und Konfigurierungsmaßnahmen werden hierzu meist vom Betriebs- und Wartungszentrum aus ferngesteuert, die üblicherweise im Bereich der Mobilvermittlungsstellen angeordnet sind. Ein Betriebsund Wartungszentrum kommuniziert dabei jeweils mit einem Basisstationssystem oder Vermittlungssysstem über eine definierte Schnittstelle. Eine weitere Aufgabe des Betriebs- und wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardwarebezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

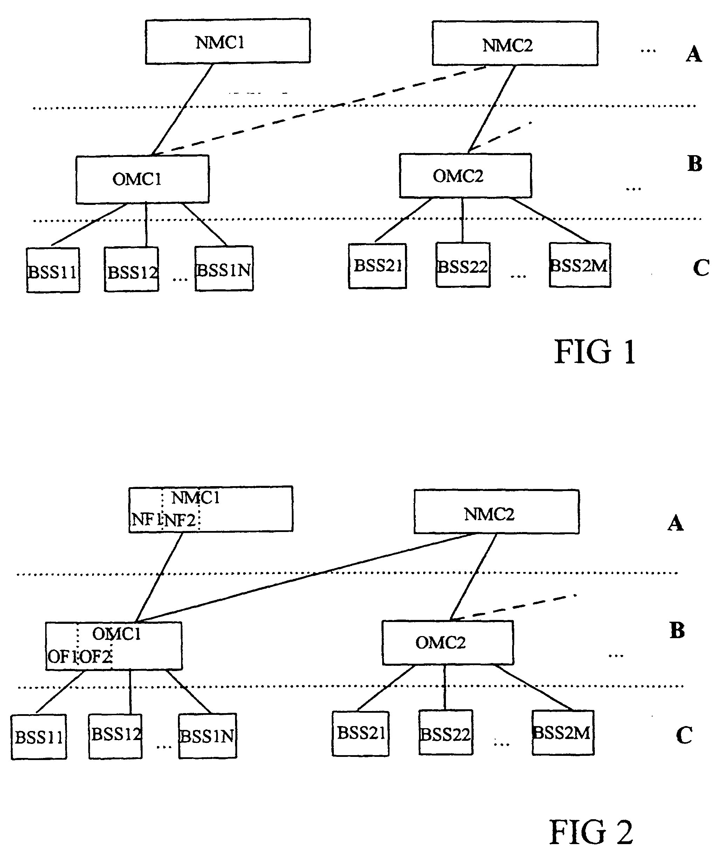

Für das Management des Mobil-Kommunikationssystems definieren die TMN-Prinzipien mehrere Ebenen ("Levels"), von denen im vorliegenden Beispiel drei Ebenen unter Bezugnahme auf die Figuren 1 und 2 nachfolgend erläutert werden.

Die Figuren 1 und 2 zeigen jeweils drei Ebenen A, B und C des Managementnetzes, von denen die Managementebene C die Netzeinrichtungsebene ("Network Element Level") mit mehreren Basisstationssystemen BSS11, BSS12...BSS1N sowie BSS21, BSS22 ...BSS2M enthält. Die Managementebene B kennzeichnet die Netzeinrichtungsmanagementebene ("Network Element Management Level"), in der Betriebs- und Wartungszentren OMC1 und OMC2 jeweils die herstellerspezifische Managementfunktionalität für einzelne Subsysteme, wie im vorliegenden Beispiel das Betriebs- und Wartungszentrum OMC1 für die Basisstationssysteme BSS11, BSS12 ...BSS1N und das Betriebs- und Wartungszentrum OMC2 für die Basisstationssysteme BSS21, BSS22...BSS2M, bereitstellen. Die Managementebene A kennzeichnet die Netzmanagementebene ("Network Management Level"), in der Netzmanagementzentren NMC1 und NMC2 jeweils eine integrierte, vom Hersteller unabhängige Management-Funktionalität realisieren. Dabei können mehrere Netzmanagementzentren einen Zugriff zu derselben Netzeinrichtung der nächstniedrigeren Managementebene B haben, im vorliegenden Beispiel die Netzmanagementzentren NMC1 und NMC2 der nächsthöheren Managementebene C zum Betriebs- und Wartungszentrum OMC1 der nächstniedrigeren Managementebene B. Zwischen den Netzeinrichtungen unterschiedlicher Managementebenen sind definierte Schnittstellen zur Informationsübertragung vorgesehen.

Der Unterschied in den Darstellungen gemäß den Figuren 1 und 2 liegt darin, daß eine Agent-Manager-Beziehung zur Behandlung von Alarmen für einen oder mehrere Alarmdatenabgleiche in Figur 1 zwischen dem Betriebs- und Wartungszentrum OMC1 (Agent) und einem Netzmanagementzentrum NMC1 (Manager) oder mehreren - physikalisch getrennten - Netzmanagementzentren NMC1, NMC2 (Manager) sowie in Figur 2 zwischen dem Basisstationssystem BSS11 (Agent) und zwei verschiedenen Anwendungen OF1 und OF2 (Manager) in dem Betriebs- und Wartungszentrum OMC1 oder zwischen dem Betriebs- und Wartungszentrum OMC1 (Agent) und zwei verschiedenen Anwendungen NF1 und NF2 (Manager) in dem Netzmanagementzentrum NMC1 besteht. Um in den Netzmanagementzentren NMC1, NMC2 jederzeit einen Überblick über die Fehlersituation sicherzustellen, werden vom Betriebs- und Wartungszentrum OMC1 die - auf Grund von beispielsweise innerhalb der betreuten Basisstationssysteme BSS11...BSS1N auftretenden Fehlern - gespeicherten Alarmdaten aktiver Alarme bereitgestellt und parallel zu beiden Managern auf Anforderung gesendet. Dies erfolgt vorzugsweise nach einem Verbindungsabbruch oder nach einer Initialisierung des Agenten oder des Managers. Ebenso können mehrere Anforderungen auch hintereinander von einem einzelnen Manager, z.B. dem Netzmanagementzentrum NMC1 an den Agent, z.B. dem Betriebsund Wartungszentrum OMC1, gerichtet werden. Figur 1 zeigt die Struktur für gemäß der Erfindung mehrfach ausgesendete Anforderungen zum Alarmdatenabgleich, die im vorliegenden Beispiel parallel zwischen der Managementebene B, in der sich der Agent in Form des Betriebs- und Wartungszentrums OMC1 befindet, und der nächsthöheren Managementebene A, in der die Manager von zumindest zwei Netzmanagementzentren NMC1, NMC2 gebildet werden, ablaufen.

Um auch in der Managementebene B, z.B. in dem Betriebs- und Wartungszentrum OMC1 jederzeit einen Überblick über die Fehlersituation sicherzustellen, werden vom Basisstationssystem BSS11 die - auf Grund von beispielsweise innerhalb der betreuten Basisstationen und Basisstationssteuerungen auftretenden Fehlern - gespeicherten Alarmdaten aktiver Alarme bereitgestellt und parallel zu mindestens zwei Managern des Betriebs- und Wartungszentrums OMC1 in Form der unterschiedlichen Anwendungen OF1 und OF2, die beide von ein- und derselben physikalischen Einrichtung OMC1 ausgeführt werden, gesendet. Dies erfolgt ebenfalls vorzugsweise nach einem Verbindungsabbruch oder nach einer Initialisierung des Agenten oder des Managers. Eine serielle Übertragung von mehrfach durch einen einzelnen Manager, z.B. dem Betriebs- und Wartungszentrum OMC1, initiierten Anforderungen an den Agent, z.B. dem Basisstationssystem BSS11, ist ebenfalls möglich. Alternativ oder zusätzlich kann eine Agent-Manager Beziehung auch zwischen dem Betriebs- und Wartungszentrum OMC1 (ein Agent) und dem Netzmanagementzentrum NMC1 (ein Manager) zum seriellen Austausch von Anforderungen und Alarmdaten oder zum parallelen Austausch von Anforderungen und Alarmdaten für mindestens zwei unterschiedliche Anwendungen NF1 und NF2 (zwei Manager) im Netzmanagementzentrum NMC1 existieren. Figur 2 zeigt die Struktur für gemäß der Erfindung parallel ablaufende Alarmdatenabgleiche zwischen der Managementebene B, in der sich die Manager als Anwendungen OF1 und OF2 befinden, und der nächstniedrigeren Managementebene C, in der sich der Agent befindet.

Sobald eine in der Managementebene C ausgefallene interne Schnittstelle wieder betriebsbereit ist, wird auf Anforderung des Managers/der Manager der Alarmdatenabgleich, auch als Realignment-Prozedur oder Realignment-Verfahren bezeichnet, parameterabhängig gesteuert und automatisch vom Agent durch wiederholtes Initiieren - vorzugsweise in periodischen Zeitabständen, die vom Manager eingestellt und dem Agent mitgeteilt werden - ausgeführt. Dabei erfolgt der Alarmdatenabgleich im vorliegenden Beispiel zuerst zwischen dem Basisstationssystem, z.B. BSS11, und den Anwendungen OF1, OF2 im Betriebs- und Wartungszentrum OMC1 parallel und setzt sich anschließend zwischen dem Betriebs- und Wartungszentrum OMC1 und den übergeordneten Netzmanagementzentren NMC1, NMC2 parallel fort. Am Ende dieser Prozeduren ist die Fehlersituation sowohl im OMC als auch in den NMC wieder aktualisiert. Das Realignment-Verfahren kann selbstverständlich auf die Aktualisierung der Alarmdaten zwischen Agent und Managern in zwei unmittelbar angrenzenden Managementebenen, z.B. Ebene B und Ebene A, beschränkt sein.

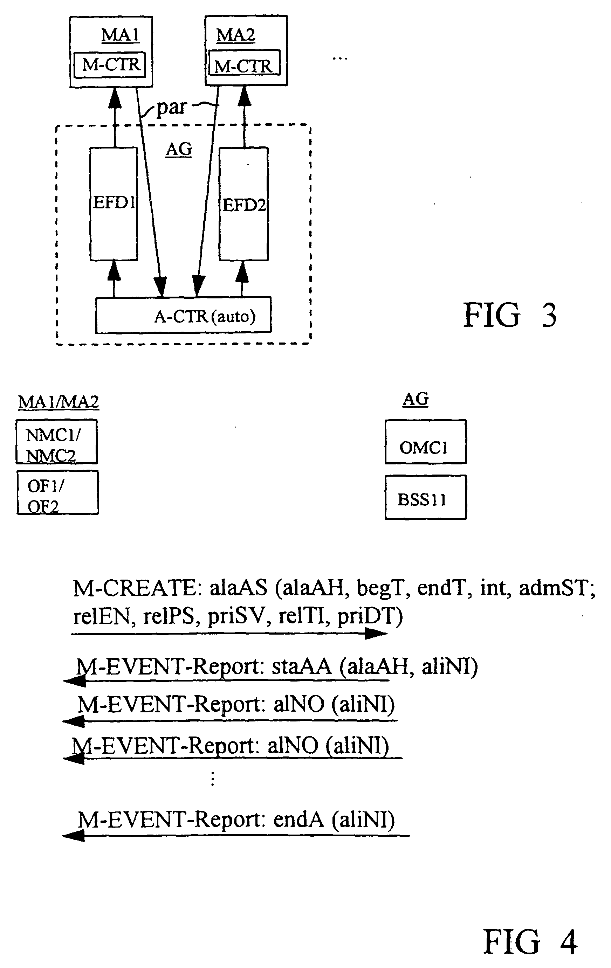

Figur 3 zeigt in schematischer Darstellung den Aufbau von Agent AG und Manager MA1, MA2 mit den zur Durchführung simultan - bei zwei oder mehreren Managern - oder seriell - bei nur einem Manager - ablaufender Realignment-Prozeduren erforderlichen Einrichtungen. Jeder Manager MA1, MA2 und Agent AG verfügt über eine Steuereinrichtung M-CTR bzw. A-CTR, die Nachrichten für den Alarmdatenabgleich generieren und auswerten können. Ebenso weisen sie - nicht näher dargestellte - Sende/Empfangseinrichtungen für das Versenden und Empfangen der Nachrichten sowie Speichereinrichtungen für das Speichern der Alarmdaten und anderer Nutz- und Signalisierungsinformationen auf.

Die Steuereinrichtungen M-CTR der Manager MA1, MA2 generieren jeweils eine Nachricht, die zu dem Agent gesendet wird und durch die ein automatischer, von dem Agent wiederholt initiierter Alarmdatenabgleich angefordert wird. Dabei enthalten die Nachrichten im Nachrichtenfluß eine für die Zuordnung einer Anforderung zu nachfolgend gesendeten Nachrichten benutzte Korrelationsinformation, die eindeutig ist. Darüber hinaus fügen die Einrichtungen M-CTR der Manager MA1, MA2 zur Steuerung des automatischen Alarmdatenabgleichs einen oder mehrere Parameter par entweder in eine Nachricht, die einzeln für jede Anforderung individuell vom Manager erzeugt und ausgesendet wird, oder in eine für mehrere Anforderungen gemeinsame Nachricht ein. Durch die Angabe eines Start- und Endezeitpunkts für den gesamten Alarmdatenabgleich und eines Zeitintervalls zur Definition der Wiederholungszeitpunkte zur Übermittlung von Alarmdaten wird der automatische Alarmdatenabgleich vom Agent periodisch gestartet und durchgeführt. Das zusätzliche Mitsenden eines oder mehrerer Parameter par mit verschiedenen Parameterwerten ermöglicht dem Manager, bestimmte Alarme gezielt vom Agent automatisch übertragen zu lassen. Aus diesem Grund verfügt die Einrichtung A-CTR des Agent AG über eine Funktion auto, mit der bei Erreichen des übermittelten Startzeitpunkts ein Alarmdatenabgleich jeweils begonnen und in den Zeitabständen des vorgegebenen Zeitintervalls bis Erreichen des Endezeitpunkts wiederholt wird. Erst durch die parametrisierbare Alignment-Funktionalität gemäß der Erfindung können beispielsweise eine Priorisierung der Alarme und/oder eine aktive Steuerung der Reihenfolge der Alarme, die vom Agent automatisch übermittelt werden (Scheduling Funktionalität), erzielt werden.

Die Steuereinrichtung A-CTR des Agent AG empfängt die Nachricht zum automatischen Alarmdatenabgleich mit den Parametern par, wertet sie aus, und startet das Realignment zu den Managern MA1, MA2 durch Rücksenden der von den Managern spezifisch angeforderten Alarme an den vom Manager gesetzten Zeitpunkten. Dabei kann zusätzlich eine Zustandsinformation (administrative State) von der Einrichtung M-CTR des Managers MA1, MA2 zum Agent AG gesendet werden, die entweder zum Unterbrechen des Alarmdatenabgleichs gesetzt oder zum Fortsetzen des automatischen Alarmdatenabgleichs rückgesetzt ist. Von der Einrichtung M-CTR des Managers MA1, MA2 wird darüber hinaus eine eindeutige Korrelationsinformation zur Korrelation der jeweiligen Anforderungen generiert und zum Agent AG gesendet. Eine Nachricht mit einer weiteren Korrelationsinformation zur Zuordnung der nachfolgend vom Agent gesendeten Nachrichten (alarm notifications) zu dem jeweils gestarteten Realignment wird ebenfalls benutzt. Auch die weitere Korrelationsinformation ist eindeutig. Durch beide Korrelationsinformationen ist eine eindeutige Zuordnung simultan oder seriell durchgeführter Realignments zu mehreren Managern oder einem einzelnen Manager möglich.

Besonders die Kombination der Basisfunktionalität - Verwendung der Korrelationsinformationen - mit der parametrisierbaren Alignment-Funktionalität für automatisches Bereitstellen und Übermitteln von Alarmen führt zu einem besonders effektiven Verfahren und Kommunikationssystem, das eine optimale Nutzung der Übertragungsressourcen auf der Schnittstelle der Agent-Manager-Beziehung sowie ein schnellstmögliches Bereitstellen nur der vom Manager gewünschten Alarmdaten aktiver Alarme für die nächsthöhere Managementebene - an definierten Zeitpunkten automatisch durch den Agent- bewirkt. Ressourcenausnutzung, Zeitdauer und Flexibilität werden folglich in dem erfindungsgemäß ausgestalteten Kommunikationssystem gegenüber der Basisfunktionalität weiter optimiert.

Wahlweise können im Agent AG mehrere, jeweils den Managern MA1, MA2 zuordenbare und von ihnen steuerbare Filterfunktionen EFD1, EFD2 (Event Forwarding Discriminators) mit Filterkriterien für die vom Agent AG erzeugten Nachrichten mitbenutzt werden, sodaß die Nachrichten mit den Alarmdaten nur bei Erfüllen der Filterkriterien zu den Managern MA1, MA2 geroutet werden. Die Steuereinrichtung M-CTR des Managers ist in der Lage, derartige Filterfunktionen im Agent AG einzurichten, zu löschen und die Filterkriterien festzulegen, um je nach seinen individuellen Anforderungen den Nachrichtenfluß steuern zu können. Daher kann der Fall auftreten, daß die Filterfunktions-Einstellung von Manager zu Manager unterschiedlich ist, sodaß durch die simultan ablaufenden Realignment-Prozeduren inhaltlich verschiedene Alarme mit zugehörigen Alarmdaten behandelt werden.

Figur 4 zeigt den Nachrichtenfluß zwischen einem Agent AG - im dargestellten Beispiel gemäß der Figur 1 dem Betriebs- und Wartungszentrum OMC1 oder im dargestellten Beispiel der Figur 2 dem Basisstationssystem BSS11 - und dem Manager MA1, MA2 - im Beispiel gemäß der Figur 1 den unterschiedlichen Netzmanagementzentren NMC1, NMC2 oder im Beispiel der Figur 2 den verschiedenen Applikationen OF1, OF2.

Der Nachrichtenfluß erfolgt vorzugsweise unter Verwendung standardisierter M-EVENT-REPORT Nachrichten, der eine zu Anfang vom Manager initiierte M-CREATE Anforderung zum Einstellen der Parameter für den automatischen Alarmdatenabgleich vorangestellt ist. Die M-CREATE Anforderung muß vom Manager jedes Mal wieder zum automatischen Alarmdatenabgleich mit wiederkehrender Übermittlung von Alarmen an den definierten Zeitpunkten initiiert und dem Agent bekannt gemacht werden. Die Nachrichten folgen generischen CMISE-standardisierten (Common Management Information Service Element) Prozeduren, die gemäß ITU-T X.710 definiert sind. Die ITU-T X.733 definiert den Inhalt einer standardisierten Alarmübertragung (alarm report), die gemäß den M-EVENT-REPORT Services durchgeführt wird. Die Korrelationsinformationen und Parameter werden in die Nachrichten bzw. in bestimmte Nachrichtenfelder eingetragen. Des weiteren versehen die Manager MA1, MA2 die Parameter zur Steuerung des Alarmdatenabgleichs mit bestimmten Parameterwerten und tragen sie einzeln oder mehrfach in die jeweilige Anforderungsnachricht ein. Das Beispiel in Figur 4 zeigt den Nachrichtenfluß nur anhand beispielhafter Nachrichten, wobei diese parallel zwischen dem Agent AG und den Managern MA1, MA2 oder seriell zwischen dem Agent AG und dem einzelnen Manager MA1 übertragen werden können.

Sobald nach einer Unterbrechung der Verbindung die Kommunikation zwischen dem Manager MA1, MA2 und dem Agent AG wiederhergestellt ist, sendet jeder Manager MA1, MA2 die M-CREATE Anforderung mit einer Nachricht alaAS (alarm Alignment Scheduler) zum Agent AG, mit der zum automatischen Übermitteln der Alarmdaten in periodischen Zeitabständen aufgerufen wird. Zu diesem Zweck sendet der Manager einen Startzeitpunkt begT und einen Endezeitpunkt endT für den gesamten Alarmdatenabgleich sowie ein Zeitintervall int zur Wiederholung des jeweiligen Alarmdatenabgleichs. Zusätzlich wird eine vom Manager MA1, MA2 definierte Korrelationsinformation alaAH (alarm Alignment Handle) mitgesendet, die eine direkte Zuordnung der aktuellen M-CREATE-Anforderung zu allen nachfolgenden Agent-Nachrichten kennzeichnet. Damit ist bei mehreren Managern die aktuelle Anforderung auch dem jeweiligen Manager zuordenbar, sodaß die parallelen Realignments der Manager voneinander unabhängig initiiert, durchgeführt und beendet werden können. Des weiteren enthält die Nachricht alaAS auch eine Zustandsinformation admS für den Agent, die zuvor vom Manager zum Unterbrechen des automatischen Alarmdatenabgleichs gesetzt und zum Fortsetzen rückgesetzt werden kann.

Die Nachricht alaAS enthält optional auch die vom Manager eingetragenen Parameterwerte für den nachfolgenden Funktionsablauf. Damit wird eine individuelle Funktionsausführung (Action) der parameterabhängigen periodischen Übermittlung der Alarme vom Agent AG angefordert. Die Parametrisierung kann vorzugsweise mit einem oder mehreren eingestellten Parameterwerten relEN (related Entities), relPS (related perceived Severity), priSV (prio severity), relTI (related Time Interval), priDT (prio Detection Time) erfolgen. Durch den spezifischen Parameterwert werden vom Agent Alarme angefordert,
- die von ausgewählten Agenteinheiten stammen (relEN),
- für die eine Dringlichkeit angenommen wird (relPS),
- anhand dessen der Agent beim Senden eine Priorisierung der angeforderten Alarme nach deren Dringlichkeit, vorzugsweise anhand unterschiedlicher Dringlichkeitswerte (priSV), vornimmt,
- die innerhalb eines durch einen Startzeitpunkt und einen Endzeitpunkt definierten Zeitraums entstehen (relTI),
- anhand dessen der Agent beim Senden eine Priorisierung der Alarme nach dem Entstehungszeitpunkt der Alarme vornimmt (priDT).

Die Parameterwerte relEN... sind in einem gemäß dem Standard vorgegebenen Nachrichtenfeld der Nachricht alaAS enthalten, um bereits vorhandene und definierte Felder für die Parametrisierung mitbenutzen zu können. Eine günstige Variante unter Einbeziehung der Zeit besteht darin, daß von dem Agent die Alarmdaten der Alarme mit den ältesten Entstehungszeitpunkten zuerst und die Alarmdaten der Alarme mit den jüngsten Entstehungszeitpunkten zuletzt bereitgestellt und gesendet werden.Eine besonders geeignete Variante der Kombination der Parameterwerte bezüglich Zeit und Dringlichkeit besteht darin, daß von dem Agent die Alarmdaten der Alarme mit kritischer Dringlichkeit, bei der die Funktionalität als nicht mehr gegeben angenommen wird, zuerst und die Alarmdaten der Alarme mit unkritischer Dringlichkeit, bei der die Funktionalität als noch gegeben angenommen wird, zuletzt bereitgestellt und gesendet werden.

Im Anschluß an die Auswertung der Parameter in der eingetroffenen Nachricht alaAS startet der Agent AG den Alarmdatenabgleich durch Erzeugen einer Nachricht staAA (start Alarm Alignment), sobald der vom Manager definierter Startzeitpunkt begT erreicht ist. Einfügen einer vom Agent definierten Korrelationsinformation aliNI (alignment Notification Id) zusammen mit der Korrelationsinformation alaAH in die Nachricht staAA ist der nächste Schritt. Die vom Agent AG generierte Korrelationsinformation aliNI ermöglicht eine direkte Korrelation nachfolgender Alarme zu dieser Nachricht staAA. Die Korrelationsinformation aliNI ist beispielsweise in dem standardisierten Nachrichtenfeld "notification Identifier" der Nachricht staAA eingetragen. Beide Informationen alaAH, aliNI werden gemeinsam in der Nachricht staAA vom Agent AG zu den Managern MA1, MA2 ausgesendet. Dadurch können "alignment-bezogene" M-EVENT-REPORT Nachrichten verschiedener M-CREATE Anforderungen voneinander unterschieden werden, aber auch von regulären M-EVENT-REPORT Nachrichten, die mit dem Datenabgleich nichts zu tun haben. Eine Alignment-Prozedur stoppt nämlich nicht zwingend andere M-EVENT-REPORT Nachrichten, die während der Alignment-Prozedur spontan auftreten und an den oder die Manager gesendet werden.

Über die in der Nachricht alaAS mitgesendete Korrelationsinformation alaAH lassen sich direkt die folgenden Nachrichten staAA und alaAS korrelieren, da sie ebenfalls die Korrelationsinformation alaAH enthalten. Die Nachrichten alNO sind über die Korrelationsinformation aliNI mit der Nachricht staAA direkt korreliert. Der jeweilige Manager kann die Nachricht alaAS mit den nachfolgenden Nachrichten alNO indirekt über die beiden in der Nachricht staAA enthaltenen Korrelationsinformationen alaAH und aliNI korrelieren.

Im Anschluß an den Start des automatischen Alarmdatenabgleichs erfolgt die sukzessive Übertragung der Alarme mit den zugehörigen Alarmdaten in aufeinanderfolgenden Nachrichten alNO (alarm notification) unter Verwendung des M-EVENT-REPORT Service. Dabei weisen die einzelnen Nachrichten alNO jeweils die Korrelationsinformation aliNI - beispielsweise in dem definierten Nachrichtenfeld "correlated Notifications" - auf. Nach der letzten Meldung eines Alarms in einer Sequenz von Nachrichten alNO erzeugt der Agent AG die Endenachricht endA (end Alignment) gemäß dem M-EVENT-Service, die ebenfalls die Korrelationsinformation aliNI enthält. Diese Korrelationsinformation ist die vom Manager MA1, MA2 zuvor definierte Korrelationsinformation. Für den Fall, daß zum jeweiligen durch "Scheduling" festgelegten Alignment-Zeitpunkt keine aktiven Alarme gespeichert sind oder alle Alarme vom aktuellen Filter EFD1, EFD2 gesperrt werden, initiiert der Agent die Nachricht endA unmittelbar nach Erhalt der Nachricht staAA.

Die obige Prozedur des automatischen Alarmdatenabgleichs wird bei jedem neu begonnenen Alignment - abhängig von dem mitgeteilten Zeitintervall int - wiederkehrend durchgeführt, bis der Endezeitpunkt endT des gesamten Alignments erreicht ist. Die Korrelationsinformationen alaAH, aliNI dienen der eindeutigen Zuordnung mehrerer Anforderungen - möglicher simultaner Realignments zu mehreren Managern oder serieller Realignments zu einem einzelnen Manager. Auch wenn das zu FIG 4 bechriebene Beispiel sich auf parallel Realignments zu mehreren Managern bezieht, kann der Nachrichtenfluß selbstverständlich auf mehrere, von einem einzigen Manager nacheinander ausgelöste Anforderungen angewendet werden, mit dem Vorteil, daß durch die eindeutige Zuordnung anhand der Korrelationsinformationen für den einzelnen Manager die Möglichkeit besteht, die eintreffenden Antworten des Agenten mit den Alarmdaten auch bei Nichteinhalten der Reihenfolge eindeutig den Anforderungen zuordnen zu können - beispielsweise unterschiedlichen Anwendungen im Manager. Nacheinander gesendete Anforderungen können sich gegebenenfalls gegenseitig überholen, beispielsweise dann, wenn zwischen Agent und Manager ein Paketnetz durchlaufen wird.

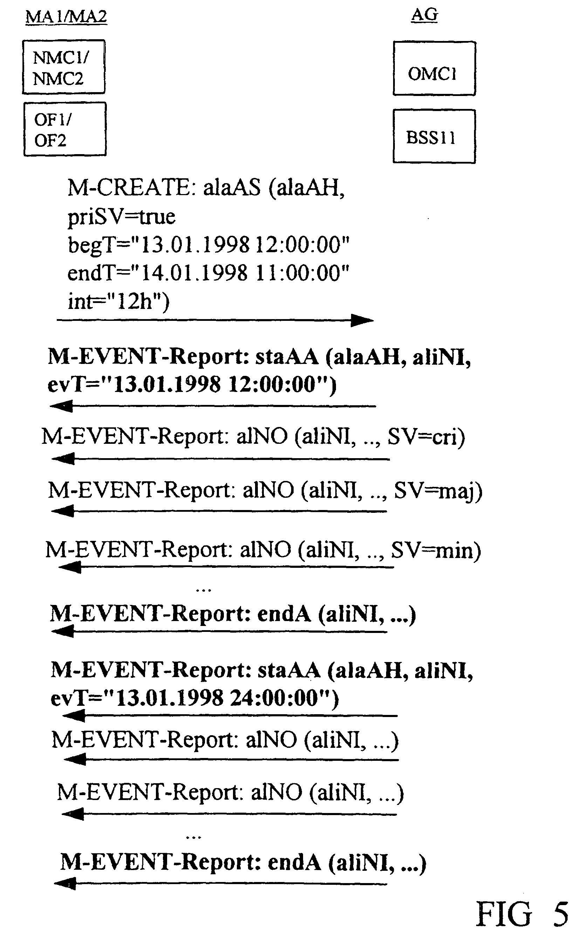

FIG 5 zeigt den Nachrichtenfluß gemäß FIG 4 für einen periodisch wiederkehrenden, automatischen Alarmdatenabgleich am Beispiel des die Dringlichkeit betreffenden Parameterwertes priSV. Der Parameterwert priSV nimmt den Wert true an, was dem Agent signalisiert, daß er bei der Sendereihenfolge der Alarme nach unterschiedlichen Dringlichkeitswerten priorisieren soll. Für den Fall, daß der Parameterwert priSV einen anderen Wert (z.B. false) annimmt, verzichtet der Agent auf die Priorisierung nach Dringlichkeitswerten. Wird das optional vorhandene Feld vom Manager zur Steuerung der angeforderten Alarme erst gar nicht benutzt, werden alle aktive Alarme, die eine angenommen Dringlichkeit aufweisen, übertragen (default-Modus). Weitere Parameterwerte - siehe FIG 4 - sind zusätzlich vom Manager setzbar.

Im vorliegenden Beispiel weisen der Startzeitpunkt (Datum und Zeit) begT den Wert "13.01.1998 12:00:00", der Endezeitpunkt endT den Wert "14.01.1998 11:00:00" und das Zeitintervall int den Wert "12h" auf. Dies bedeutet, daß gezielt nur die Alarme - priorisiert nach deren Dringlichkeit (siehe obige Ausführungen) - , die zwischen "13.01.1998 12:00:00" und "14.01. 1998 11:00:00" auftreten, gemäß dem automatischen Alignment, das alle 12 Stunden vom Agent wiederholt initiiert wird, vom Agent zur Verfügung gestellt und zum Manager gesendet werden.

Daher wird die Nachricht staAA vom Agent ab einem Zeitpunkt evt (event Time) gesendet, sobald dieser den Wert "13.01.1998 12:00:00" erreicht. Die folgenden Nachrichten alNO enthalten die Alarmdaten der ausgewählten Alarme unter Verwendung des M-EVENT-REPORT Service. Die einzelnen Nachrichten alNO weisen neben der Korrelationsinformation aliNI einen Wert für die Dringlichkeit SV (perceived Severity) des Alarms auf. Die unterschiedlichen Dringlichkeitswerte reichen von "kritisch" cri (critical) über "wichtig" maj (major), "weniger wichtig" min (minor) bis zu "unkritisch" war (warning). Als kritisch wird ein Alarm aufgefasst, bei der die Funktionalität als nicht mehr gegeben angenommen wird, während bei einem unkritischen Alarm die Funktionalität als noch gegeben betrachtet wird. Empfängt der Manager den Dringlichkeitswert war, fasst er diesen Alarm als Warnung bezüglich einer möglichen Beeinträchtigung der Funktionen des Agent auf.

Bei dem eingestellten Parameter priSV bezüglich der Dringlichkeit ist der zuerst gemeldete Alarm mit entsprechenden Alarmdaten in der Nachricht alNO als Alarm kritischer Dringlichkeit, SV=cri, gekennzeichnet. Die nächstfolgenden Nachrichten alNO mit Alarmdaten enthalten einen Wert SV=maj zur Kennzeichnung eines Alarms mit einer wichtigen Dringlichkeit sowie einen Wert SV=min zur Kennzeichnung eines Alarms mit einer weniger wichtigen Dringlichkeit. Die am Ende des automatischen Alignments gesendete Nachricht endA zeigt dem Manager an, daß die Sequenz von Alarmdaten der im Agent gespeicherten Alarme beendet ist. Dabei weist die Nachricht endA die vom Agent zuvor zugewiesene Korrelationsinformation aliNI auf.

Ein weiteres Mal startet der Agent automatisch einen Alarmdatenabgleich, sobald der Zeitpunkt evt (event Time) den Wert "13.01.1998 24:00:00" annimmt, d.h. das eingestellte Zeitintervall int="12h" für die Wiederholung erreicht. Im folgenden sendet der Agent - analog zu obigen Beispielen - einige Alarmdaten in den Nachrichten alNO, deren Sendereihenfolge durch die Dringlichkeitswerte der vorhandenen Alarme bestimmt ist. Das Ende des zweiten Alarmdatenabgleichs erkennt der Manager an der ebenfalls zuletzt vom Agent gesendeten Nachricht endA mit entsprechender Korrelationsinformation aliNI. Weitere Abgleiche sind in dem durch die Werte begT, endT, int eingestellten beispielhaften Zeitfenster nicht vorgesehen. Grundsätzlich können die vom Agent automatisch initiierten Abgleiche in kürzeren Zeitabständen und damit in einer höheren Anzahl je nach dem vom Manager bestimmten Zeitfenster auftreten.

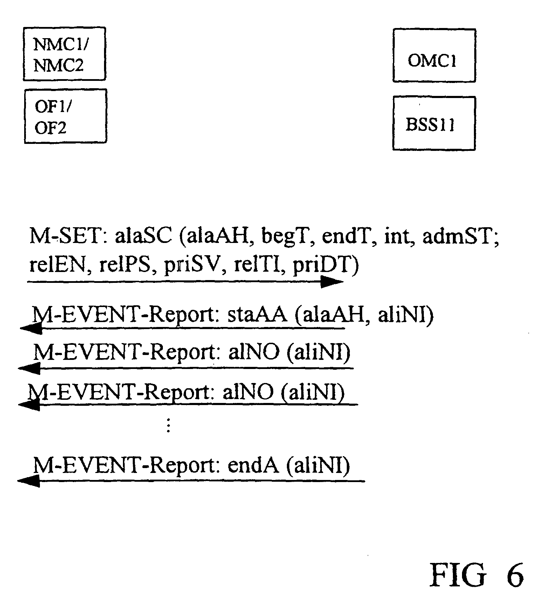

Im Gegensatz zu der Einstellung pro M-CREATE Anforderung zeigt FIG 6 den Nachrichtenfluß zwischen dem Manager und dem Agent zur parameterabhängigen Steuerung des automatischen Alarmdatenabgleichs durch eine einmalige Einstellung der zeitbezogenen Werte begT, endT, int, die für mehrere anschließende Anforderungen gemeinsam Gültigkeit behält. Damit wird in vorteilhafter Weise ein periodisches Übertragen definierter Alarme für den automatischen Alarmdatenabgleich erzielt, ohne daß es jedes Mal einer Neueinstellung der obigen zeitbezogenen Werte bedarf. Zu diesem Zweck ist der M-EVENT REPORT Nachrichtensequenz - mit den Nachrichten staAA, alNO und endA, siehe Beschreibung zu FIG 4 - eine M-SET Anforderung vorangestellt, mit der eine Nachricht alaSC einschließlich der vom Manager optional einfügbaren Parameter relEN, relPS, priSV, relTI, priDT als Auswahlkriterien für die vom Agent zu übertragenden Alarme gesendet wird. Diese optionalen Parameter können unabhängig von den zeitbezogenen Werten begT, endT, int von dem Manager geändert werden. Den Parametern beigestellt ist die Korrelationsinformation alaAH. Erfindungsgemäß sind auch die Werte begT für den Startzeitpunkt, endT für den Endezeitpunkt sowie int für das Zeitintervall zum periodischen Wiederholen des Alarmdatenabgleichs eingetragen. Das Setzen der Zustandsinformation admST zum Unterbrechen des automatischen Alarmdatenabgleichs und das Rücksetzen der Zustandsinformation admST zum späteren Fortsetzen des automatischen Alarmdatenabgleichs kann ebenfalls vom Manager durchgeführt werden.

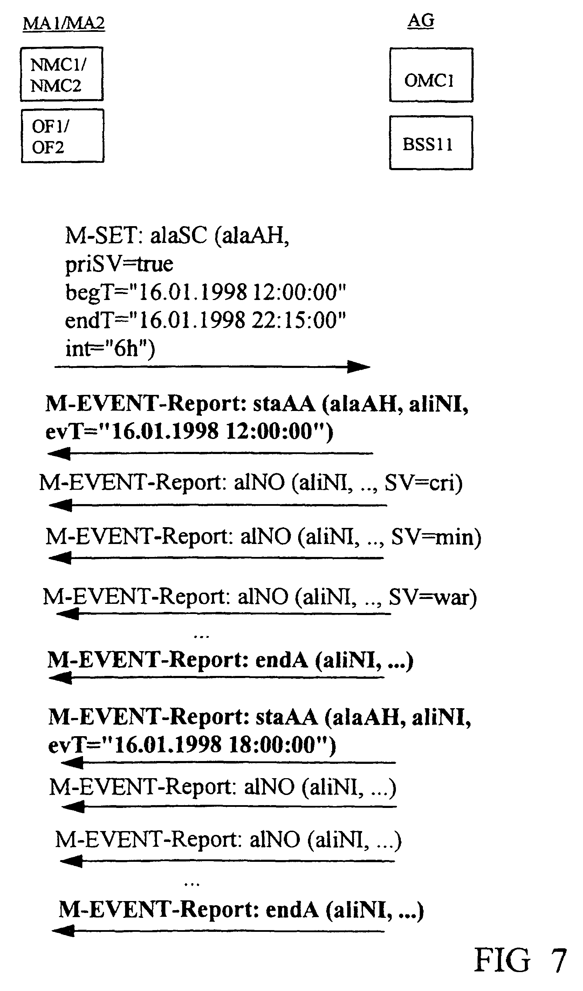

FIG 7 zeigt den zur Vorgehensweise von FIG 6 gehörigen Nachrichtenfluß bei Einstellung des zu FIG 5 bereits beschriebenen Parameters priSV. Im Unterschied zu FIG 5 werden das durch den Anfangszeitpunkt begT und den Endezeitpunkt endT sowie das Zeitintervall int festgelegte Zeitfenster und der Parameter priSV - nur in diesem Zeitfenster sollen vom Agent die Alarme nach Dringlichkeit priorisiert werden - vom Manager in die Nachricht alaSC gemäß der M-SET Anforderung eingefügt und vorab zum Agent gesendet. Die Einstellungen behalten für alle darauffolgenden Anforderungsnachrichten ihre Gültigkeit, bis eine neue Setznachricht M-SET die bisherigen Parameter und das alte Zeitfenster überschreibt oder für ungültig erklärt. Ein weiterer Unterschied betrifft das Zeitfenster, das durch den Startzeitpunkt begT="16.01.1998 12:00:00", den Endezeitpunkt endT="16.01.1998 22:15:00" und das Zeitintervall int="6h" vom Manager definiert ist. Dies bedeutet, daß gezielt nur die Alarme - priorisiert nach deren Dringlichkeit (siehe obige Ausführungen) - , die zwischen "16.01.1998 12:00:00" und "16.01. 1998 22:15:00" auftreten, gemäß dem automatischen Alignment, das alle 6 Stunden vom Agent wiederholt initiiert wird, vom Agent zur Verfügung gestellt und zum Manager gesendet werden.

Daher wird die Nachricht staAA vom Agent am Zeitpunkt evt="16.01.1998 12:00:00" erstmalig gesendet. Die folgenden Nachrichten alNO enthalten die Alarmdaten der ausgewählten Alarme unter Verwendung des M-EVENT-REPORT Service. Die einzelnen Nachrichten alNO weisen neben der Korrelationsinformation aliNI den Wert für die Dringlichkeit SV (perceived Severity) des Alarms auf. Bei dem eingestellten Parameter priSV bezüglich der Dringlichkeit ist der zuerst gemeldete Alarm mit entsprechenden Alarmdaten in der Nachricht alNO als Alarm kritischer Dringlichkeit, SV=cri, gekennzeichnet. Die nächstfolgende Nachrichten alNO mit Alarmdaten enthält den Wert SV=min zur Kennzeichnung eines Alarms mit einer weniger wichtigen Dringlichkeit. Der nächste vom Agent in der Nachricht alNO gemeldete Alarm hat den Wert SV=war zur Kennzeichnung eines Alarms mit lediglich einer Warnung, bei der die Funktionalität noch als gewährleistet angenommen ist. Die am Ende des automatischen Alignments an den Manager gesendete Nachricht endA weist die vom Agent zuvor zugewiesene Korrelationsinformation aliNI auf.

Ein weiteres Mal startet der Agent automatisch den Alarmdatenabgleich, sobald der Zeitpunkt evt den Wert "16.01.1998 18:00:00" annimmt, d.h. das eingestellte Zeitintervall int="6h" für die Wiederholung erreicht. Im folgenden sendet der Agent - analog zu obigen Beispielen - einige Alarmdaten in den Nachrichten alNO, deren Sendereihenfolge durch die Dringlichkeitswerte der vorhandenen Alarme bestimmt ist. Das Ende des zweiten Alarmdatenabgleichs erkennt der Manager an der ebenfalls zuletzt vom Agent gesendeten Nachricht endA mit entsprechender Korrelationsinformation aliNI. Weitere Abgleiche sind in dem durch die Werte begT, endT, int eingestellten beispielhaften Zeitfenster nicht vorgesehen. Grundsätzlich können die vom Agent automatisch initiierten Abgleiche in kürzeren Zeitabständen und damit in einer höheren Anzahl je nach dem vom Manager bestimmten Zeitfenster auftreten.

## Patentansprüche

1. Verfahren zur Behandlung von Alarmen in einem Kommunikationssystem durch ein mehrere Managementebenen (A, B, C) aufweisendes Managementnetz, wobei für einen Alarmdatenabgleich zwischen einem Agent (AG) einer Managementebene (B, C) und zumindest einem Manager (MA1, MA2) einer nächsthöheren Managementebene (A, B) die Alarmdaten aktiver Alarme übertragen werden, **dadurch gekennzeichnet,**
- **daß** von dem Manager (MA1, MA2) eine Nachricht (alaAS, alaSC) zu dem Agent (AG) gesendet wird, durch die ein automatischer, von dem Agent (AG) wiederholt initiierter Alarmdatenabgleich angefordert wird,
- **daß** von dem Manager (MA1, MA2) eine Korrelationsinformation (aliNI) für eine Zuordnung der Anforderung zu den vom Agent (AG) nachfolgend gesendeten Nachrichten (alNO) mit den Alarmdaten empfangen wird, und
- **daß** von dem Manager (MA1, MA2) der automatische Alarmdatenabgleich abhängig von zumindest einem zum Agent (AG) gesendeten Parameter (par) gesteuert wird.

2. Verfahren nach Anspruch 1, bei dem
von dem Manager (MA1, MA2) der oder die Parameter (par) in der Nachricht (alaAS, alaSC) zum automatischen Alarmdatenabgleich gesendet werden.

3. Verfahren nach Anspruch 1 oder 2, bei dem
die Nachricht (alaAS) zum automatischen Alarmdatenabgleich von dem Manager (MA1, MA2) einzeln für jede Anforderung, zu dem Agent (AG) gesendet wird.

4. Verfahren nach Anspruch 1 oder 2, bei dem
die Nachricht (alaSC) zum automatischen Alarmdatenabgleich von dem Manager (MA1, MA2) für mehrere Anforderungen gemeinsam zu dem Agent (AG) gesendet wird.

5. Verfahren nach einem der vorhergehenden Ansprüche, bei dem von dem Agent (AG) nach jedem durchgeführten Alarmdatenabgleich eine Nachricht (endA) zum Manager (MA1, MA2) gesendet wird, mit der dem Manager (MA1, MA2) das Ende des jeweiligen Alarmdatenabgleichs mitgeteilt wird.

6. Verfahren nach einem der vorhergehenden Ansprüche, bei dem von dem Manager (MA1, MA2) in der Nachricht (alaAS, alaSC) zum automatischen Alarmdatenabgleich ein Startzeitpunkt (begT) und ein Endezeitpunkt (endT) für den gesamten Alarmdatenabgleich sowie ein Zeitintervall (int) zur Wiederholung des jeweiligen Alarmdatenabgleichs gesendet werden.

7. Verfahren nach Anspruch 6, bei dem
von dem Manager (MA1, MA2) zusätzlich eine Zustandsinformation (admST) zum Agent (AG)gesendet wird, die zum Unterbrechen des automatischen Alarmdatenabgleichs gesetzt und zum Fortsetzen rückgesetzt wird.

8. Verfahren nach einem der vorhergehenden Ansprüche, bei dem ein Parameter (par) von dem Manager (MA1, MA2) mit einem Parameterwert (relEN) versehen wird, durch den vom Agent (AG) Alarme angefordert werden, die von ausgewählten Agenteinheiten stammen.

9. Verfahren nach einem der vorhergehenden Ansprüche, bei dem ein Parameter (par) von dem Manager (MA1, MA2) mit einem Parameterwert (relPS) versehen wird, durch den vom Agent (AG) Alarme angefordert werden, für die eine Dringlichkeit angenommen wird.

10. Verfahren nach Anspruch 9, bei dem
von dem Manager (MA1, MA2) ein zusätzlicher Parameterwert (priPS) benutzt wird, anhand dessen der Agent (AG) eine Priorisierung beim Senden der angeforderten Alarme nach deren Dringlichkeit vornimmt.

11. Verfahren nach Anspruch 10, bei dem
der Agent (AG) die Priorisierung der zu dem Manager (MA1, MA2) zu übertragenden Alarme nach unterschiedlichen Dringlichkeitswerten (cri, maj, min, war) vornimmt.

12. Verfahren nach einem der vorhergehenden Ansprüche, bei dem ein Parameter (par) von dem Manager (MA1, MA2) mit einem Parameterwert (relTI) versehen wird, durch den vom Agent (AG) Alarme angefordert werden, die innerhalb eines durch einen Anfangszeitpunkt (inst) und einen Endzeitpunkt (inen) definierten Zeitraum entstehen.

13. Verfahren nach einem der vorhergehenden Ansprüche, bei dem von dem Manager (MA1, MA2) ein zusätzlicher Parameterwert (priDT) benutzt wird, anhand dessen der Agent (AG) eine Priorisierung beim Senden der Alarme nach dem Entstehungszeitpunkt (evT) der Alarme vornimmt.

14. Verfahren nach Anspruch 13, bei dem
von dem Agent (AG) die Alarmdaten der Alarme mit kritischer Dringlichkeit, bei der die Funktionalität als nicht mehr gegeben angenommen wird, zuerst und die Alarmdaten der Alarme mit unkritischer Dringlichkeit, bei der die Funktionalität als noch gegeben angenommen wird, zuletzt automatisch bereitgestellt und gesendet werden.

15. Kommunikationssystem zur Behandlung von Alarmen durch ein mehrere Managementebenen (A, B, C) aufweisendes Managementnetz, wobei für einen Alarmdatenabgleich zwischen einem Agent (AG) einer Managementebene (z.B. B) und zumindest einem Manager (MA1, MA2) einer nächsthöheren Managementebene (z.B. A) die Alarmdaten aktiver Alarme übertragen werden,
**gekennzeichnet durch**
- Einrichtungen (M-CTR) in dem Manager (MA1, MA2) für das Senden einer Nachricht (alaAS, alaSC) zu dem Agent (AG), **durch** die ein automatischer, von dem Agent (AG) wiederholt initiierter Alarmdatenabgleich angefordert wird,
- Einrichtungen (M-CTR) in dem Manager (MA1, MA2) für das Empfangen einer Korrelationsinformation (aliNI) für eine Zuordnung der jeweiligen Anforderung zu den vom Agent (AG) nachfolgend gesendeten Nachrichten (alNO) mit den Alarmdaten, und
- Einrichtungen (M-CTR) in dem Manager (MA1, MA2) für eine Steuerung des Alarmdatenabgleich abhängig von zumindest einem zum Agent (AG) gesendeten Parameter (par).

16. Kommunikationssystem nach Anspruch 15, bei dem
die Einrichtungen (M-CTR) in dem Manager (MA1, MA2) den oder die Parameter (par) in jede Anforderungsnachricht (repAA) einfügen.

17. Kommunikationssystem nach Anspruch 15 oder 16, bei dem die Einrichtungen (M-CTR) in dem Manager (MA1, MA2) die Nachricht (alaAS) zum automatischen Alarmdatenabgleich einzeln für jede Anforderung zu dem Agent (AG) senden.

18. Kommunikationssystem nach Anspruch 15 oder 16, bei dem die Einrichtungen (M-CTR) in dem Manager (MA1, MA2) die Nachricht (alaSC) zum automatischen Alarmdatenabgleich gemeinsam für mehrere Anforderungen zu dem Agent (AG) senden.

19. Kommunikationssystem nach einem der Ansprüche 15 bis 18, bei dem die Einrichtungen (M-CTR) in dem Manager (MA1, MA2) in die Nachricht (alaAS, alaSC) zum automatischen Alarmdatenabgleich einen Startzeitpunkt (begT). und einen Endezeitpunkt (endT) für den gesamten Alarmdatenabgleich sowie ein Zeitintervall (int) zur Wiederholung des jeweiligen Alarmdatenabgleichs einfügen.

20. Kommunikationssystem nach einem der Ansprüche 15 bis 19, bei dem von dem Manager (MA1, MA2) ein Parameter (par) mit einem Parameterwert (relEN) versehen ist, durch den vom Agent (AG) Alarme angefordert werden, die von ausgewählten Agenteinheiten stammen.

21. Kommunikationssystem nach einem der Ansprüche 15 bis 20, bei dem ein Parameter (par) von dem Manager (MA1, MA2) mit einem Parameterwert (relPS) versehen ist, durch den vom Agent (AG) Alarme angefordert werden, für die eine Dringlichkeit angenommen wird.

22. Kommunikationssystem nach Anspruch 21, bei dem
von dem Manager (MA1, MA2) ein zusätzlicher Parameterwert (priPS) benutzt ist, anhand dessen der Agent (AG) eine Priorisierung beim Senden der angeforderten Alarme nach deren Dringlichkeit vornimmt.

23. Kommunikationssystem nach einem der Ansprüche 15 bis 22, bei dem ein Parameter (par) von dem Manager (MA1, MA2) mit einem Parameterwert (relTI) versehen ist, durch den vom Agent (AG) Alarme angefordert werden, die innerhalb eines durch einen Anfangszeitpunkt (inst) und einen Endzeitpunkt (inen) definierten Zeitintervalls entstehen.

24. Kommunikationssystem nach einem der Ansprüche 15 bis 23, von dem Manager (MA1, MA2) ein zusätzlicher Parameterwert (priDT) benutzt ist, anhand dessen der Agent (AG) eine Priorisierung beim Senden der Alarme nach dem Entstehungszeitpunkt (evT) der Alarme vornimmt.

## Claims

1. Method for processing alarms in a communication system using a management network involving several layers of management (A, B, C), in which the alarm data for active alarms is transmitted for alarm realignment between an agent (AG) of a management level (B, C) and at least one manager (MA1, MA2) of a layer of management immediately above (A, B), **characterised in that**
- the manager (MA1, MA2) sends the agent (AG) a message (alaAS, alaSC) requesting an automatic alarm realignment to be repeatedly initiated by the agent (AG),
- the manager (MA1, MA2) receives correlation information (aliNI) for assigning the request to the messages (alNO) containing the alarm data, subsequently sent by the agent (AG), and
- the manager (MA1, MA2) controls the automatic alarm realignment according to at least one parameter (par) sent to the agent (AG).

2. Method according to Claim 1, in which the manager (MA1, MA2) sends the parameter or parameters (par) in the message (alaAS, alaSC) for automatic alarm realignment.

3. Method according to Claims 1 or 2, in which the manager (MA1, MA2) sends the agent (AG) the message (alaAS) for automatic alarm realignment individually for each request.

4. Method according to Claims 1 or 2, in which the manager (MA1, MA2) sends the agent (AG) the message (alaSC) for automatic alarm realignment for a plurality of requests in common.

5. Method according to one of the preceding Claims, in which after every completed alarm realignment the agent (AG) sends the manager (MA1, MA2) a message (endA) informing the manager (MA1, MA2) that the alarm realignment concerned has come to an end.

6. Method according to one of the preceding Claims, in which the manager (MA1, MA2) sends the message (alaAS, alaSC) for automatic alarm realignment containing a starting time (begT) and a finishing time (endT) for the whole alarm realignment as well as a time interval (int) in which to repeat the alarm realignment concerned.

7. Method according to Claim 6, in which the manager (MA1, MA2) additionally sends the agent (AG) an item of status information (admST) which is set in order to interrupt the automatic alarm realignment and reset to continue.

8. Method according to one of the preceding Claims, in which the manager (MA1, MA2) provides a parameter (par) with a parameter value (relEN) by which to send a request to the agent (AG) for alarms arising from selected agent units.

9. Method according to one of the preceding Claims, in which the manager (MA1, MA2) provides a parameter (par) with a parameter value (relPS) by which to send a request to the agent (AG) for alarms for which urgency is assumed.

10. Method according to Claim 9, in which the manager (MA1, MA2) uses an additional parameter value (priPS) by means of which the agent (AG) prioritises the requested alarms at the time of transmission according to their urgency.

11. Method according to Claim 10, in which the agent (AG) prioritises the alarms to be sent to the manager (MA1, MA2) in accordance with different urgency values (cri, maj, min, war).

12. Method according to one of the preceding Claims, in which the manager (MA1, MA2) provides a parameter (par) with a parameter value (relTI) by which to send a request to the agent (AG) for alarms arising within a period of time defined by a starting time (inst) and a finishing time (inen).

13. Method according to one of the preceding Claims, in which the manager (MA1, MA2) uses an additional parameter value (priDT) by means of which the agent (AG) prioritises the alarms at the time of transmission according to their event time (evT).

14. Method according to Claim 13, in which the agent (AG) automatically prepares and sends first of all the alarm data of the alarms with critical urgency in which functionality is assumed to be no longer available, and last of all the alarm data of the alarms with uncritical urgency in which functionality is assumed to be no longer available.

15. Communication system for processing alarms using a management network involving several layers of management (A, B, C), in which the alarm data for active alarms is transmitted for alarm realignment between an agent (AG) of a management level (e.g. B) and at least one manager (MA1, MA2) of a layer of management immediately above (e.g. A), **characterised by**
- elements (M-CTR) in the manager (MA1, MA2) for sending a message (alaAS, alaSC) to the agent (AG) to request an automatic alarm realignment which the agent (AG) initiates at repeated intervals,
- elements (M-CTR) in the manager (MA1, MA2) for receiving correlation information (aliNI) for assigning a particular request to the messages (alNO) subsequently sent by the agent (AG) with the alarm data, and
- elements (M-CTR) in the manager (MA1, MA2) for controlling the alarm realignment according to at least one parameter (par) which has been sent to the agent (AG).

16. Communication system according to Claim 15, in which the elements (M-CTR) in the manager (MA1, MA2) insert the parameter or parameters (par) into each request message (repAA).

17. Communication system according to Claim 15 or 16, in which the elements (M-CTR) in the manager (MA1, MA2) send the agent (AG) the message (alaAS) for automatic alarm realignment individually for each request.

18. Communication system according to Claim 15 or 16, in which the elements (M-CTR) in the manager (MA1, MA2) send the agent (AG) the message (alaAS) for automatic alarm realignment for a plurality of requests in common.

19. Communication system according to one of the Claims 15 to 18, in which the elements (M-CTR) in the manager (MA1, MA2) insert into the message (alaAS, alaSC) for automatic alarm realignment a starting time (begT) and a finishing time (endT) for the whole alarm realignment as well as a time interval (int) in which to repeat the alarm realignment concerned.

20. Communication system according to one of the Claims 15 to 19, in which the manager (MA1, MA2) provides a parameter (par) with a parameter value (relEN) by which to send a request to the agent (AG) for alarms arising from selected agent units.

21. Communication system according to one of the Claims 15 to 20, in which the manager (MA1, MA2) provides a parameter (par) with a parameter value (relPS) by which to send a request to the agent (AG) for alarms for which urgency is assumed.

22. Communication system according to Claim 21, in which the manager (MA1, MA2) uses an additional parameter value (priPS) by means of which the agent (AG) prioritises the requested alarms at the time of transmission according to their urgency.

23. Communication system according to one of the Claims 15 to 22, in which the manager (MA1, MA2) provides a parameter (par) with a parameter value (relTI) by which to send a request to the agent (AG) for alarms arising within a period of time defined by a starting time (inst) and a finishing time (inen).

24. Communication system according to one of the Claims 15 to 23, in which the manager (MA1, MA2) uses an additional parameter value (priDT) by means of which at the time of transmission the agent (AG) prioritises the alarms according to their event time (evT).

## Revendications

1. Procédé pour le traitement d'alarmes dans un système de communication par un réseau de gestion présentant plusieurs niveaux de gestion (A, B, C), les données d'alarme d'alarmes actives étant transmises pour un alignement de données d'alarme entre un agent (AG) d'un niveau de gestion (B, C) et au moins un gestionnaire (MA1, MA2) d'un niveau de gestion (A, B) immédiatement supérieur, **caractérisé**
- **en ce que** le gestionnaire (MA1, MA2) envoie un message (alaAS, alaSC) à l'agent (AG), par lequel on demande un alignement de données d'alarme automatique et initié de façon répétée par l'agent (AG),
- **en ce que** le gestionnaire (MA1, MA2) reçoit une information de corrélation (aliNI) pour une attribution de la demande aux messages (alNO) envoyés ensuite par l'agent (AG) avec les données d'alarme, et
- **en ce que** le gestionnaire (MA1, MA2) commande l'alignement automatique de données d'alarme en fonction d'au moins un paramètre (par) envoyé à l'agent (AG).

2. Procédé selon la revendication 1, dans lequel
le gestionnaire (MA1, MA2) envoie le ou les paramètres (par) dans le message (alaAS, alaSC) pour l'alignement automatique de données d'alarme.

3. Procédé selon la revendication 1 ou 2, dans lequel
le message (alaAS) pour l'alignement automatique de données d'alarme est envoyé par le gestionnaire (MA1, MA2) individuellement pour chaque demande à l'agent (AG).

4. Procédé selon la revendication 1 ou 2, dans lequel
le message (alaSC) est envoyé pour l'alignement automatique de données d'alarme par le gestionnaire (MA1, MA2) pour plusieurs demandes conjointement à l'agent (AG).

5. Procédé selon l'une quelconque des revendications précédentes, dans lequel l'agent (AG) envoie après chaque alignement de données d'alarme effectué un message (endA) au gestionnaire (MA1, MA2) avec lequel la fin de l'alignement respectif de données d'alarme est signalée au gestionnaire (MA1, MA2).

6. Procédé selon l'une quelconque des revendications précédentes, dans lequel le gestionnaire (MA1, MA2) envoie dans le message (alaAS, alaSC) pour l'alignement automatique de données d'alarme un moment de démarrage (begT) et un moment de fin (endT) pour l'ensemble de l'alignement de données d'alarme ainsi qu'un intervalle de temps (int) pour la répétition de l'alignement respectif de données d'alarme.

7. Procédé selon la revendication 6, dans lequel
le gestionnaire (MA1, MA2) envoie en supplément une information d'état (admST) à l'agent (AG), qui est mise pour l'interruption de l'alignement automatique de données d'alarme et remise pour la poursuite.

8. Procédé selon l'une quelconque des revendications précédentes, dans lequel un paramètre (par) est pourvu par le gestionnaire (MA1, MA2) d'une valeur de paramètre (relEN), par laquelle l'agent (AG) demande des alarmes qui proviennent d'unités d'agent sélectionnées.

9. Procédé selon l'une quelconque des revendications précédentes, dans lequel un paramètre (par) est pourvu par le gestionnaire (MA1, MA2) d'une valeur de paramètre (reIPS), par laquelle l'agent (AG) demande des alarmes pour lesquelles une urgence est supposée.

10. Procédé selon la revendication 9, dans lequel
le gestionnaire (MA1, MA2) utilise une valeur de paramètre (priPS) supplémentaire, à l'aide de laquelle l'agent (AG) effectue une mise en priorité lors de l'envoi des alarmes demandées en fonction de leur urgence.

11. Procédé selon la revendication 10, dans lequel
l'agent (AG) effectue la mise en priorité des alarmes à transmettre au gestionnaire (MA1, MA2) en fonction de différentes valeurs d'urgence (cri, maj, min, war).

12. Procédé selon l'une quelconque des revendications précédentes, dans lequel un paramètre (par) est pourvu par le gestionnaire (MA1, MA2) avec une valeur de paramètre (relTI), par laquelle l'agent (AG) demande des alarmes qui interviennent à l'intérieur d'un laps de temps défini par un moment initial (inst) et un moment de fin (inen).

13. Procédé selon l'une quelconque des revendications précédentes, dans lequel le gestionnaire (MA1, MA2) utilise une valeur de paramètre (priDT) supplémentaire, à l'aide de laquelle l'agent (AG) effectue une mise en priorité lors de l'envoi des alarmes en fonction du moment de survenance (evT) des alarmes.

14. Procédé selon la revendication 13, dans lequel
l'agent (AG) met à disposition et envoie automatiquement d'abord les données d'alarme des alarmes présentant une urgence critique, avec laquelle la fonctionnalité n'est plus considérée comme existante, et en dernier les données d'alarme des alarmes avec une urgence non critique, pour laquelle la fonctionnalité est supposée encore présente.

15. Système de communication pour le traitement d'alarmes par un réseau de gestion présentant plusieurs niveaux de gestion (A, B, C), les données d'alarme d'alarmes actives étant transmises pour un alignement de données d'alarme entre un agent (AG) d'un niveau de gestion (par exemple B) et au moins un gestionnaire (MA1, MA2) d'un niveau de gestion immédiatement supérieur (par exemple A),
**caractérisé par**
- des facilités (M-CTR) dans le gestionnaire (MA1, MA2) pour l'envoi d'un message (alaAS, alaSC) à l'agent (AG), par lequel un alignement de données d'alarme automatique et initié de façon répétée par l'agent (AG) est demandé,
- des facilités (M-CTR) dans le gestionnaire (MA1, MA2) pour la réception d'une information de corrélation (aliNI) pour une attribution de la demande respective aux messages (alNO) envoyés ensuite par l'agent (AG) avec les données d'alarme et
- des facilités (M-CTR) dans le gestionnaire (MA1, MA2) pour une commande de l'alignement de données d'alarme en fonction d'au moins un paramètre (par) envoyé à l'agent (AG).

16. Système de communication selon la revendication 15, dans lequel les facilités (M-CTR) dans le gestionnaire (MA1, MA2) insèrent le ou les paramètres (par) dans chaque message de demande (repAA).

17. Système de communication selon la revendication 15 ou 16, dans lequel les facilités (M-CTR) dans le gestionnaire (MA1, MA2) envoient le message (alaAS) pour l'alignement automatique des données d'alarme individuellement pour chaque demande à l'agent (AG).

18. Système de communication selon la revendication 15 ou 16, dans lequel les facilités (M-CTR) dans le gestionnaire (MA1, MA2) envoient le message (alaSC) pour l'alignement automatique de données d'alarme conjointement pour plusieurs demandes à l'agent (AG).

19. Système de communication selon l'une quelconque des revendications 15 à 18, dans lequel les facilités (M-CTR) dans le gestionnaire (MA1, MA2) insèrent dans le message (alaAS, alaSC) pour l'alignement automatique de données d'alarme un moment de démarrage (begT) et un moment de fin (endT) pour l'ensemble de l'alignement de données d'alarme et un intervalle de temps (int) pour la répétition de l'alignement respectif de données d'alarme.

20. Système de communication selon l'une quelconque des revendications 15 à 19, dans lequel le gestionnaire (MA1, MA2) attribue un paramètre (par) avec une valeur de paramètre (relEN) par laquelle l'agent (AG) demande des alarmes qui proviennent d'unités d'agent sélectionnées.

21. Système de communication selon l'une quelconque des revendications 15 à 20, dans lequel un paramètre (par) est pourvu par le gestionnaire (MA1, MA2) d'une valeur de paramètre (relPS), par laquelle l'agent (AG) demande des alarmes pour lesquelles une urgence est supposée.

22. Système de communication selon la revendication 21, dans lequel le gestionnaire (MA1, MA2) utilise une valeur de paramètre (priPS) supplémentaire, à l'aide de laquelle l'agent (AG) effectue une mise en priorité lors de l'envoi des alarmes demandées en fonction de leur urgence.

23. Système de communication selon l'une quelconque des revendications 15 à 22, dans lequel un paramètre (par) est pourvu par le gestionnaire (MA1, MA2) d'une valeur de paramètre (relTI), par laquelle l'agent (AG) demande des alarmes qui surviennent à l'intérieur d'un intervalle de temps défini par un moment initial (inst) et un moment de fin (inen).

24. Système de communication selon l'une quelconque des revendications 15 à 23, une valeur de paramètre (priDT) supplémentaire étant utilisée par le gestionnaire (MA1, MA2), à l'aide de laquelle l'agent (AG) effectue une mise en priorité lors de l'envoi des alarmes selon le moment de survenance (evT) des alarmes.
